# EUROPEAN PATENT SPECIFICATION

(11) **EP 1 603 959 B1**
(45) Date of publication and mention of the grant of the patent: **22.07.2009**
(21) Application number: 04719451.9
(22) Date of filing: 11.03.2004
(51) Int. Cl.: C08F 230/08, C08J 3/24, C07F 7/18

(54) **PROCESS FOR THE PREPARATION OF FUNCTIONALIZED FLUOROMONOMERS AND THEIR COPOLYMERS WITH VINYLIDENE FLUORIDE**
VERFAHREN ZUR HERSTELLUNG VON FUNKTIONALISIERTEN FLUOROMONOMEREN UND DEREN COPOLYMERE MIT VINYLIDENFLUORID
PROCÉDÉ POUR LA PRÉPARATION DE FLUOROMONOMÈRES FONCTIONNALISÉS ET LEURS COPOLYMERES AVEC FLUORURE DE VINYLIDENE

(30) Priority: 11.03.2003 FR 0303033
(43) Date of publication of application: 14.12.2005
(73) Proprietor: SOLVAY (Société Anonyme), 1050 Bruxelles (BE)
(72) Inventor: LANNUZEL, Thierry, F-69100 Villeurbanne (FR); AMEDURI, Bruno, F-34000 MONTPELLIER (FR); GUIOT, Jérôme, F-30380 SAINT CHRISTOL LES ALES (FR); BOUTEVIN, Bernard, F-34090 MONTPELLIER (FR)
(86) International application number: PCT/EP2004/002636
(87) International publication number: WO 2004/081066

(56) References cited:
- DATABASE WPI Week 1988 Derwent Publications Ltd., London, GB; AN 1988-089139 XP002289081 OZAKI YUTAKA: "Vinylidene fluoride group composite pipe and manufacture thereof" & JP 63 041136 A (AGENCY IND SCIENCE TECHN) 22 February 1988 (1988-02-22)
- PATENT ABSTRACTS OF JAPAN vol. 1997, no. 07, 31 July 1997 (1997-07-31) & JP 9 077829 A (TOAGOSEI CO LTD), 25 March 1997 (1997-03-25)
- PATENT ABSTRACTS OF JAPAN vol. 0151, no. 33 (C-0820), 2 April 1991 (1991-04-02) & JP 3 017087 A (TOSHIBA SILICONE CO LTD), 25 January 1991 (1991-01-25) cited in the application
- AMEDURI B ET AL: "Synthesis and polymerization of fluorinated monomers bearing a reactive lateral group Part 2. Synthesis of nonconjugated dienes" JOURNAL OF FLUORINE CHEMISTRY, ELSEVIER SEQUOIA. LAUSANNE, CH, vol. 89, no. 2, 29 May 1998 (1998-05-29), pages 167-172, XP004118588 ISSN: 0022-1139 cited in the application

## Description

The present invention relates to a process for the manufacture of functionalized fluoromonomers.

PVDF (poly(vinylidene fluoride) homopolymer or copolymer with other fluoromonomers, such as HFP (hexafluoropropylene), CTFE (chlorotrifluoroethylene), TrFE (trifluoroethylene) or TFE (tetrafluoroethylene), for example) is known for its noteworthy properties of resistance to chemicals and to temperature, in particular, and for its surface hardness and resistance to abrasion. However, for some applications, this resistance is still insufficient and it is known to improve it, in particular, by crosslinking. A technique often currently used for this purpose consists of the crosslinking by electron irradiation of the PVDF resin optionally modified beforehand by agents which promote crosslinking, such as TAIC (triallyl isocyanurate), for example. However, this technique is expensive and involves the use of specialized equipment and appropriate safety standards. In addition, this technique is limited to the crosslinking of relatively thin finished objects, given that the thickness of penetration of the electron beams is limited.

Consequently, "chemical" crosslinking techniques, that is to say involving the chemical modification (functionalization) of the resin in order to promote interchain reactions, have been developed (for numerous polymers, including fluoropolymers and in particular PVDF). Among these techniques, those where the crosslinking reaction can be carried out (mainly, at least, which does not rule out the presence of slight crosslinking after polymerization) after the processing are preferred as they make possible the use of conventional processing methods, such as extrusion or injection moulding. One of the means for obtaining a functionalized PVDF consists in copolymerizing vinylidene fluoride (VF2) with a functionalized monomer, for example carrying a siloxane group (group capable of reacting with a similar group in the presence of moisture), which is capable of copolymerizing with VF2. However, VF2 is a monomer renowned for the difficulty it has in copolymerizing. One of the problems which the present invention is consequently targeted at solving consists in finding monomers carrying a siloxane functional group which are capable of copolymerizing with VF2 to give a copolymer which can be crosslinked with water, these monomers having to be available industrially and/or easy to synthesize.

Patent Application JP 3-17087-A discloses a family of compounds having, on the one hand, a trifluorovinyl group capable of reacting with other (optionally fluorinated) unsaturated monomers and, on the other hand, a group of hydrolyzable silane or siloxane type which confers adhesion and crosslinking with water thereon. Such compounds can be used as surface treatment agents or as monomers suitable for grafting to or copolymerizing with other unsaturated monomers/polymers which may or may not be fluorinated. Two synthetic routes are mentioned : the reaction of a halogenated alkyl with an organosilicon compound (siloxane, hydrosilane, and the like) or the reaction of an olefin carrying a trifluorovinyl group with a hydrosilane. Only the first alternative is described in detail in this patent application, which gives as example in particular the synthesis of 1-trimethoxysilyl-3,4,4-trifluroro-3-butene by this route and the copolymerization of this monomer with HFP. The copolymerization of such monomers with VF2 is not mentioned.

The Applicant has found that another synthetic route, not mentioned in this application, and applied to given precursors, the route for the synthesis of which is furthermore known, makes it possible to obtain specific monomers, not mentioned in the patent application, which copolymerize particularly well with VF2 and make it possible to obtain VF2-based copolymers which can be easily crosslinked in the presence of moisture.

These monomers, which are manufacture by means of the process of the present invention, correspond to the following chemical formula : CF₂=CF-(CH₂)₃-Si(OR)₃ with R = methyl or ethyl group (I).

They are therefore 1-(trimethoxy- or triethoxy)silyl-4,5,5-trifluoro-4-pentene.

Subject-matter of the present invention is a specific synthetic route for these monomers, which consists of the reaction, in the presence of certain catalyst, of a given trialkoxysilane (trimethoxy- or triethoxysilane) with 1,1,2-trifluoro-1,4-pentadiene (II) as specified in claim 1. This synthetic route exhibits in particular the advantage that the synthesis of the precursor (II) is furthermore known, in particular from B. Ameduri et al., J. Fluorine Chem., 89, pp. 167-172 (1998), which is incorporated by reference in the present application. In comparison with its C₄ homologue (1,1,2-trifluoro-1,3-butadiene), which might act as precursor for the synthesis of 1-trimethoxysilyl-3,4,4-trifluoro-3-butene (given as example in the abovementioned Japanese patent application), the precursor (II) exhibits the advantage of being liquid and non gaseous, which renders the synthesis of the trifluoroalkoxysilanes easier and makes it possible to obtain high yields.

The reaction between the trialkoxysilane and the precursor (II) can be carried out with particularly high yields provided that a suitable catalyst is chosen. Catalysts which are highly suitable are catalysts based on Pt, namely a Speier catalyst (H₂PtCl₆) or a Karstedt catalyst (complex of Pt and of divinyltetramethyldisiloxane). The latter gives particularly good results. In point of fact, it is not obvious a priori to obtain such a high selectivity (that is to say, such a high degree of addition of the silane to the non-fluorinated double bond of the diene). The Applicant has also found that trimethoxysilane is more reactive than triethoxysilane with respect to the precursor (II).

The reaction between the trialkoxysilane and the precursor (II) is carried out at a temperature of of greater than or equal to 130°C. In addition, this reaction is advantageously carried out for a period of time sufficient to obtain a high yield, that is to say preferably of greater than or equal to 90%, indeed even greater than or equal to 95% (expressed as percentage by weight with respect to the total weight of reactants employed). Generally, this period of time is greater than or equal to 10 h and preferably greater than or equal to 15 h, indeed even greater than or equal to 24 h.

The synthetic route for the precursor (II) taught by the abovementioned paper by Ameduri et al. consists of 3 stages :
1. the addition of iodine chloride to CTFE by photoinitiation to form dichlorotrifluoroiodoethane,
2. the reaction between the latter and allyl acetate in the presence of a suitable initiator to form 2-iodo-4,5,5-trifluoro-4,5-dichloropentyl acetate (III),
3. the deiodoacetylation and the dehalogenation of the latter in the presence of zinc (preferably in an amount 5 times (in moles) that of the acetate) and in a suitable solvent to form 1,1,2-trifluoro-1,4-pentadiene (II).

It results from the above that the present invention also relates to the process for the manufacture of the monomers (I) which is mentioned above, according to which 1,1,2-trifluoro-1,4-pentadiene (II) is synthesized by a process comprising the following stages :
1. addition of iodine chloride to CTFE by photoinitiation to form dichlorotrifluoroiodoethane,
2. reaction between the latter and allyl acetate in the presence of an initiator to form 2-iodo-4,5,5-trifluoro-4,5-dichloropentyl acetate (III),
3. deiodoacetylation followed by dehalogenation of the acetate (III) in the presence of zinc in a solvent.

According to the paper by Ameduri et al., the initiators capable of being used in stage 2 are organic peroxides, such as dibenzoyl peroxide and bis(4-(tert-butyl)cyclohexyl) peroxydicarbonate. However, the Applicant has found that tert-amyl peroxypivalate (TAPPI) gives better results, in particular in terms of selectivity (that is to say, reduces the formation of 1-iodomethyl-3,4,4-trifluoro-3,4-dichlorobutyl acetate (IV)). In comparison with dibenzoyl peroxide, this initiator decomposes at a lower temperature while generating less heat, which makes it possible to limit the temperature of the reaction medium and appears to inhibit the formation of the undesired form (IV).

Still according to the paper by Ameduri et al., the solvents capable of being used in stage 3 of the formation of the precursor (II) are organic solvents of methanol or ethylene glycol type. However, the Applicant has found that DMF (dimethylformamide) gives good results, particularly in the presence of ultrasound. In reality, it would appear (without the Applicant having to be committed to this explanation) that the reaction takes place in 2 stages ; deiodoacetylation, followed by dehalogenation, the 2 reactions being exothermic, and that only the 1st reaction is promoted by ultrasound. It is advantageous for the 1st reaction to take place at a lower temperature than the second, and preferably in the presence of ultrasound.

The fluorosilicon monomers described above (referred to hereinafter as siloxanes) are capable of conferring specific properties on PVDF and in particular the ability to crosslink in the presence of water. Consequently, the present invention also relates to a process for manufacturing copolymers based on siloxanes obtained by the process of the invention and on VF2, alone or in combination with a minor amount (in moles) of another monomer of olefin type, preferably of fluoro-olefin type (HFP, CTFE, TrFE, TFE, and the like), to give what will be referred to subsequently as "modified PVDF resins". Copolymers solely based on VF2 and on siloxanes as described above are particularly easy to obtain.

The copolymerization of siloxanes as described above with VF2 (and optionally another olefin, which may or may not be fluorinated) can be carried out by any known process: in solution, suspension, emulsion, and the like. Preferably, this copolymerization is carried out in solution in a suitable solvent, such as supercritical CO₂ or acetonitrile or 1,1,1,3,3-pentafluorobutane, for example, the latter two giving good results. In any case, it is preferable for the copolymerization medium to be anhydrous, otherwise a certain degree of hydrolysis will occur and therefore a degree of crosslinking will occur during the copolymerization (whereas it is generally desired to carry out the crosslinking after copolymerization and even after processing).

The copolymerization is generally carried out in the presence of a suitable initiator (organic peroxide, such as DHBP (2,5-bis(tert-butylperoxy)-2,5-dimethylhexane) or TBPPI (tert-butyl peroxypivalate), for example).

As the aim is generally to obtain a resin mainly based on VF2 (modified PVDF), the copolymerization reaction will generally be carried out in the presence of an excess of VF2 (in moles with respect to the siloxane), typically in the presence of at least 70 mol% of VF2, indeed even of at least 90 mol% of VF2 (with respect to the total number of moles of VF2 and of siloxane employed). Such a copolymerization reaction generally results in copolymers having a predominant content of VF2, typically of greater than or equal to 70%, indeed even of greater than or equal to 90%. With regard to the content of trialkoxysilane groups in these copolymers, this content is generally greater than or equal to 1 mol%, indeed even greater than or equal to 3 mol%, but is generally less than or equal to 15 mol%, indeed even less than or equal to 8 mol%. The Applicant has found that the siloxanes have less tendency to polymerize than VF2 and that copolymerization with a siloxane substituted with methyl (trimethoxysilane) gives better yields than with a siloxane substituted with ethyl (triethoxysilane).

The copolymerization temperature and time are to be optimized according to the initiator used. Generally, temperatures of greater than or equal to 50°C, indeed even of greater than or equal to 100°C, are used. With regard to the reaction time, it is generally of the order of a few hours, typically of 2 h or more.

As mentioned above, copolymers based on VF2 and siloxanes as described above are highly suitable in particular for being processed in the form of objects, optionally thick objects, capable of being at least partially crosslinked in the presence of water or of moisture and more particularly of hot water or of steam, thus at high temperature. This is because the fact that the OR group (substituent of the siloxane) is a methoxy or ethoxy group (short chain group) facilitates the removal of the corresponding alcohol (during the reaction with water to form connections). The copolymers based on siloxanes substituted by methoxy groups sometimes have a tendency to crosslink slightly during the polymerization, which does not appear (or appears less) to be the case with the copolymers based on siloxanes substituted by ethoxy groups.

The crosslinking reaction generally consists of a heat treatment of the copolymers described above at a temperature of greater than or equal to 100°C, indeed even of greater than or equal to 150°C and even of greater than or equal to 200°C, in the presence of water or of steam. The duration of this treatment is preferably greater than or equal to 1 h, indeed even greater than or equal to 2 h, in order to obtain virtually complete crosslinking of the polymer, which is expressed in particular by an insolubility in certain solvents, such as acetone, for example.

Objects (and in particular pipelines) based on modified and crosslinked PVDF resin often find application in fields highly demanding from the thermomechanical and/or chemical viewpoint, such as in the area of oil (offshore pipelines used in the extraction and transportation of oil out at sea), the chemical industry, and the like. The crosslinking of pipelines made of modified PVDF in order to manufacture offshore pipes therefrom is a particularly advantageous field of application. Mention may be made, as other advantageous applications, of "film" applications in protective coating (protection against corrosion, for example) and "pipe" (or transportation of fluids) applications in general (better resistance to cracking).

The present invention consequently also relates to the process as described above for crosslinking the copolymers, applied to these copolymers in the form of films or of pipes.

The present invention is illustrated without implied limitation by the following examples:

### Examples 1 and 2: Synthesis of the trifluorovinyl-trialkoxysilane monomers

### Stage A: Synthesis of 1-iodo-1,2-dichlorotrifluoroethane (V)

An equimolar amount of ICl and CTFE (1.51 mol) was reacted in a Carius tube, under UV irradiation (Philips HPK 125W lamp), at ambient temperature and with magnetic stirring for 12 h. The reaction product was first treated with a solution of Na thiosulfate saturated with NaOH and the 2 isomers obtained (ClCF₂CFClI (V) and Cl₂CFCF₂I (V'), boiling point (B.p.) = 99°C) were subsequently recovered by distillation. A yield of V+V' by weight of 55% (with respect to the total weight of the reactants employed) was obtained. The V/V' ratio, which is 19, was subsequently determined by ¹⁹F MNR.

### Stage B: Synthesis of 2-iodo-4,5,5-trifluoro-4,5-dichloropentyl acetate (III)

An equimolar amount of V (in the form of the product generated in the preceding stage, that is to say also comprising V') and of allyl acetate (0.358 mol) was introduced into a thermally regulated reactor and the combined mixture was brought to 70°C. 0.0114 mol of TAPPI was then introduced. After 3 min, the reaction medium became colourless, then an exothermic reaction took place, which brought the medium to 140°C, following which the solution became dark red. The two stereoisomers of (III) were collected by distillation (B.p. = 64°C under 0.001 mmHg) with a yield of 75%.

### Stage C: Synthesis of 1,1,2-trifluoro-1,4-pentadiene (II)

30 ml of DMF and 1.32 mol of Zn powder were introduced into a reactor equipped with a distillation device. This reactor was placed in a thermally regulated water bath equipped with a stirrer and with an ultrasound generator. The temperature of the bath was subsequently set at 50°C, the stirrer and the ultrasound generator were switched on and 0.263 mol of (III) was added dropwise.

An exothermic reaction took place during this addition. At the end of the addition, the ultrasound generator was removed, the water of the bath was replaced by oil and the temperature was raised to 100°C. A second exothermic reaction took place, following which all the diene formed (colourless liquid, identified by ¹H NMR and by ¹⁹F NMR) was directly distilled (B.p. = 35°C) with a yield of 80%.

### Stage D: Synthesis of 1-(trimethoxy- and triethoxy)silyl-4,5,5-trifluoro-4-pentene (I)

### Example 1: Synthesis of 1-trimethoxysilyl-4,5,5-trifluoro-4-pentene (I')

The air in a 270 ml Carius tube equipped with a magnetic stirrer was replaced by nitrogen. Several drops of Speier catalyst and an equimolar amount of (II) and of trimethoxysilane (0.246 mol) were introduced therein. The tube was cooled (in an acetone/liquid nitrogen bath) and was sealed. The assembly was brought to 110°C in an oil bath for 19 h. The tube was subsequently quenched in liquid nitrogen and opened. A black liquid was collected and was distilled to produce I' (colourless liquid, B.p. = 83-85°C at 20 mmHg, identified by ¹H NMR, ¹⁹F NMR, ¹³C NMR and ²⁹Si NMR) with a yield of 90%.

### Example 2: Synthesis of 1-triethoxysilyl-4,5,5-trifluoro-4-pentene (I")

The same procedure as in Example 1 was employed but replacing trimethoxysilane with triethoxysilane and varying the nature of the catalyst, the reaction time and reaction temperature as indicated in Table I below, which also includes the results obtained (for I": B.p. = 105-108°C/20 mmHg).

**Table I:**

| Example | Catalyst | T (°C) | Time (h) | Yield (%,¹⁹F) | Yield (%, ¹H) |
|---|---|---|---|---|---|
| 2A | Speier | 110 | 19 | 0 | 0 |
| 2B | (without) | 130 | 24 | 0 | 0 |
| 2C | DHBP | 130 | 15 | 0 | - |
| 2D | Speier | 130 | 24 | 91 | 94 |
| 2E | Karstedt | 130 | 24 | 97 | 98 |

### Examples 3, 4 and 6: Synthesis of copolymers based on VF2 and on the monomers I' and I" obtained in Examples 1 and 2

The chosen initiator (2 mol%), the chosen siloxane (I' or I") and the acetonitrile (Tests 3 to 5) or 1,1,1,3,3-pentafluorobutane (Test 6) (100 ml) were introduced into a 160 ml autoclave. The reactor was subsequently purged with nitrogen and VF2 was introduced. The time and the temperature were recorded for each test. Once the test was finished, the reactor was cooled to ambient temperature and was subsequently placed in ice. The reaction product was precipitated from cold pentane and white powder was collected in each case and was identified by ¹⁹F NMR. The breakdown of the tests and of the results obtained appears in Table II below:

**Table II:**

| Example | I' or I", VF2 mono. (mol%) | T (°C), time (h), initiator | Yield (%) | VF2 (% polym.) |
|---|---|---|---|---|
| 3 | I', 90.0 | 120, 16, DHBP | 10.0 | 96.7 |
| 4 | I', 94.5 | 70, 3, TBPPI | 34.6 | 98.1 |
| 5 | I', 94.4 | 70, 3, TBPPI | 28.4 | 96.4 |
| 6 | I', 95.1 | 135, 7, DHBP | 30 | 95.8 |

### Example 7: Crosslinking of the copolymer according to Example 5

1.2 g of copolymer resulting from Example 5 were dissolved in 2.4 g of acetone. The solution was filtered through a filter having pores of 0.22 µm and a film was cast on glass by spin coating (*) followed by evaporation of the solvent. These films were treated in the presence of ambient air at 200°C for a variable period of time and then their solubility in acetone was examined. The results obtained appear in Table III below:

**Table III:**

| Example | Duration of the treatment (h) | Solubility of the film in acetone |
|---|---|---|
| 7A | 0 | Yes |
| 7B | 0.5 | Yes |
| 7C | 1.0 | Partial |
| 7D | 1.5 | No |
| 7E | 2.0 | No |

| | | |
|---|---|---|
| (*) spin coating conditions: rotational speed = 1000 revolutions/min; acceleration 2000 revolutions/min/s; spinning time: 20 s; the thickness of the film obtained is from 1 to 3 microns. | | |

## Claims

1. Process for the synthesis of functionalized fluoromonomers corresponding to the following chemical formula: CF₂=CF-(CH₂)₃-Si(OR)₃ with R = methyl or ethyl group (I), consisting of the reaction of trimethoxy- or triethoxysilane with 1,1,2-trifluoro-1,4-pentadiene (II) in the presence of a Pt-based catalyst selected from Speier catalyst and Karstedt catalyst, at a temperature of greater than or equal to 130°C.

2. Process according to Claim 1, where the catalyst is a Karstedt catalyst (complex of Pt and of divinyltetramethyldisiloxane).

3. Process according to Claim 1 or 2, **characterized in that** 1,1,2-trifluoro-1,4-pentadiene (II) is synthesized by a process comprising the following stages:
1. addition of iodine chloride to chlorotrifluoroethylene (CTFE) by photoinitiation to form dichlorotrifluoroiodoethane,
2. reaction between the latter and allyl acetate in the presence of an initiator to form 2-iodo-4,5,5-trifluoro-4,5-dichloropentyl acetate (III),
3. deiodoacetylation followed by dehalogenation of the acetate (III) in the presence of zinc in a solvent.

4. Process according to Claim 3, in which the initiator used in stage 2 is tert-amyl peroxypivalate (TAPPI).

5. Process according to Claim 3 or 4, in which the solvent used in stage 3 is DMF (dimethylformamide).

6. Process according to any one of Claims 3 to 5, **characterized in that**, in stage 3, the deiodoacetylation takes place at a lower temperature than the dehalogenation and in the presence of ultrasound.

7. Process for the synthesis of copolymers based on functionalized fluoromonomers and on vinylidene fluoride (VF2), alone or in combination with a minor amount (in moles) of another monomer of fluoro-olefin type, **characterized in that** the functionalized fluoromonomers are obtained by the process according to any one of the preceding Claims.

8. Process according to Claim 7, **characterized in that** the copolymers are crosslinked by a heat treatment at a temperature of greater than or equal to 100°C in the presence of water or of steam.

9. Process according to Claim 7 or 8, **characterized in that** the copolymers are crosslinked in the form of films or of pipes.

## Patentansprüche

1. Verfahren zur Synthese von funktionalisierten Fluormonomeren der folgenden chemischen Formel: CF₂=CF-(CH₂)₃-Si(OR)₃ mit R = Methyl- oder Ethylgruppe (I), bestehend aus der Umsetzung von Trimethoxy- oder Triethoxysilan mit 1,1,2-Trifluor-1,4-pentadien (II) in Gegenwart eines auf Pt basierenden Katalysators, ausgewählt unter Speier-Katalysator und Karstedt-Katalysator, bei einer Temperatur größer oder gleich 130°C.

2. Verfahren nach Anspruch 1, bei dem es sich bei dem Katalysator um einen Karstedt-Katalysator (Komplex von Pt und Divinyltetramethyldisiloxan) handelt.

3. Verfahren nach Anspruch 1 oder 2, **dadurch gekennzeichnet, daß** man 1,1,2-Trifluor-1,4-pentadien (II) durch ein Verfahren mit den folgenden Stufen synthetisiert :
1. Addition von Iodchlorid an Chlortrifluorethylen (CTFE) durch Photoinitiierung zur Bildung von Dichlortrifluoriodethan,
2. Umsetzung zwischen der letztgenannten Verbindung und Essigsäureallylester in Gegenwart eines Initiators zur Bildung von Essigsäure-2-iod-4,5,5-trifluor-4,5-dichlorpentylester (III),
3. Deiodoacetylierung und nachfolgende Dehalogenierung des Essigsäureesters (III) in Gegenwart von Zink in einem Lösungsmittel.

4. Verfahren nach Anspruch 3, bei dem es sich bei dem in Stufe 2 verwendeten Initiator um tert-Amylperoxypivalat (TAPPI) handelt.

5. Verfahren nach Anspruch 3 oder 4, bei dem es sich bei dem in Stufe 3 verwendeten Lösungsmittel um Dimethylformamid (DMF) handelt.

6. Verfahren nach einem der Ansprüche 3 bis 5, **dadurch gekennzeichnet, daß** in Stufe 3 die Deiodo-acetylierung bei niedrigerer Temperatur als die Dehalogenierung und in Gegenwart von Ultraschall erfolgt.

7. Verfahren zur Synthese von Copolymeren auf Basis von funktionalisierten Fluormonomeren und Vinylidenfluorid (VF2), alleine oder in Kombination mit einer untergeordneten Menge (in Mol) eines anderen Monomers vom Fluorolefin-Typ, **dadurch gekennzeichnet, daß** man die funktionalisierten Fluormonomere nach dem Verfahren nach einem der vorhergehenden Ansprüche erhält.

8. Verfahren nach Anspruch 7, **dadurch gekennzeichnet, daß** man die Copolymere durch eine Wärmebehandlung bei einer Temperatur größer gleich 100°C in Gegenwart von Wasser oder Wasserdampf vernetzt.

9. Verfahren nach Anspruch 7 oder 8, **dadurch gekennzeichnet, daß** man die Copolymere in Form von Filmen oder von Rohren vernetzt.

## Revendications

1. Procédé pour la synthèse des monomères fluorés fonctionnalisés répondant à la formule chimique suivante : CF₂=CF-(CH₂)₃-Si(OR)₃ avec R = groupement méthyle ou éthyle (I) consistant en en la réaction du triméthyl- ou du triéthyl-alkoxysilane avec le 1,1,2-trifluoro-1,4-pentadiène (II) en présence d'un catalyseur à base de Pt choisi parmi le catalyseur de Speier et le catalyseur de Karstedt, à une température supérieure ou égale à 130°C.

2. Procédé selon la revendication 1, dans lequel le catalyseur est un catalyseur de Karstedt (complexe de Pt et de divinyltétraméthyldisiloxane).

3. Procédé selon la revendication 1 ou 2, **caractérisé en ce que** le 1,1,2-trifluoro-1,4-pentadiène (II) est synthétisé par un procédé comprenant les étapes suivantes :
1. addition de chlorure d'iode sur du CTFE par photo-initiation pour former du dichlorotrifluoroio do éthane
2. réaction entre ce dernier et de l'acétate d'allyle en présence d'un amorceur pour former le 2-iodo-4,5,5-trifluoro-4,5-dichloropentyl acétate (III)
3. dé-iodo-acétylation suivie de dé-halogénation de l'acétate (III) en présence de zinc dans un solvant.

4. Procédé selon la revendication 3, dans lequel l'amorceur utilisé à l'étape 2 est le tert-amyl peroxypivalate (TAPPI).

5. Procédé selon la revendication 3 ou 4, dans lequel le solvant utilisé à l'étape 3 est la DMF (diméthylformamide).

6. Procédé selon l'une quelconque des revendications 3 à 5, **caractérisé en ce que** à l'étape 3, la dé-iodo-acétylation a lieu à plus basse température que la dé-halogénisation et en présence d'ultrasons.

7. Procédé pour la synthèse de copolymères à base de monomères fluorés fonctionnalisés, et de fluorure de vinylidène (VF2) seul ou en combinaison avec une quantité minoritaire (en moles) d'un autre monomère de type oléfinique fluoré, **caractérisé en ce que** les monomères fluorés fonctionnalisés sont obtenus au moyen du procédé selon l'une quelconque des revendications précédentes.

8. Procédé selon la revendication 7, **caractérisé en ce que** les copolymères sont réticulés au moyen d'un traitement thermique à une température supérieure ou égale à 100°C en présence d'eau ou de vapeur d'eau.

9. Procédé selon la revendication 7 ou 8, **caractérisé en ce que** les copolymères sont réticulés sous forme de films ou de tubes.
